Europäisches Patentamt

European Patent Office

Office européen des brevets

(11) Veröffentlichungsnummer: **0 306 905**
**A2**

(12) **EUROPÄISCHE PATENTANMELDUNG**

(21) Anmeldenummer: **88114558.5**

(51) Int. Cl.⁴: **F02D 41/14**

(22) Anmeldetag: **07.09.88**

(30) Priorität: **09.09.87 AT 2279/87**

(43) Veröffentlichungstag der Anmeldung:
**15.03.89 Patentblatt 89/11**

(84) Benannte Vertragsstaaten:
**AT DE FR GB IT NL SE**

(71) Anmelder: **Jenbacher Werke AG**
**Achenseestrasse 1-3**
**A-6200 Jenbach/Tirol(AT)**

(72) Erfinder: **Magreiter, Johann**
**Embach 65**
**A-6300 Angerberg(AT)**
Erfinder: **Hofer, Bernhard**
**Erzherzog-Eugen-Strasse 18**
**A-6020 Innsbruck(AT)**
Erfinder: **Rabanser, Günther, Dipl.-Ing.**

**A-6236 Alpach 235(AT)**

(74) Vertreter: **Torggler, Paul, Dr. et al**
**Wilhelm-Greil-Strasse 16**
**A-6020 Innsbruck(AT)**

(54) **Einrichtung zur Erkennung von Zünd- und Entflammaussetzern.**

(57) Eine Einrichtung zur Erkennung von Zünd- und Entflammaussetzern bei einer im Bereich des stöchiometrischen Verbrennungs-Luftverhältnisses ($\lambda$ = 1) betriebenen mehrzylindrigen Verbrennungskraftmaschine (1). Eine Drehzahlanalyseschaltung zur Analyse eines von einer Drehzahlerfassungseinrichtung (8,11) gelieferten elektrischen Drehzahl- oder Leistungssignales enthält ein Differenzierglied (14) und einen nachgeschalteten Komparator (15), der bei Überschreiten eines vorbestimmten Schwellwertes für die Ableitung des Drehzahlsignales einen einen Zünd-oder Entflammaussetzer eines Zylinders anzeigenden Ausgangsimpuls liefert. Die Ausgangsimpulse werden in einer Zähleinrichtung (17) über eine bestimmte Meßperiodendauer gezählt. Bei Erreichen eines bestimmten Zählerstandes innerhalb dieser Meßperiodendauer erfolgt ein Ausgangssignal.

Fig. 2

Die Erfindung betrifft eine Einrichtung zur Erkennung von Zünd- und Entflammaussetzern bei einer insbesondere im Bereich des stöchiometrischen Verbrennungs-Luftverhältnisses betriebenen mehrzylindrigen Verbrennungskraftmaschine.

Die rasche Erkennung von Zünd- und Entflammaussetzern in einem oder mehreren Zylindern ist vor allem bei Verbrennungskraftmaschinen (Motoren), in deren Abgasleitung ein Katalysator angeordnet ist, von großer Bedeutung, da unverbranntes Kraftstoff-Luftgemisch den teuren Katalysator schädigen kann. Aber auch bei sonstigen Verbrennungskraftmaschinen kann eine Erkennung von Zünd- und Entflammaussetzern günstig sein, wobei beispielsweise ein unrunder Motorlauf oder eine schlechte Ausnutzung des zugeführten Kraftstoffes vermeidbar sind.

In der Praxis treten Dauerausssetzer eines Zylinders (etwa bei vollständigem Ausfall einer Zündkerze) sowie stochastisch verteilte Einzelaussetzer auf, die im allgemeinen erst ab einer bestimmten Anzahl pro Zeiteinheit von Bedeutung sind.

Bisher hat man mittels Thermoelementen die Abgastemperatur der einzelnen Zylinder überwacht. Zum Schutz des Katalysators erwies sich diese Methode zu träge bzw. zu ungenau, weil Einzelaussetzer damit überhaupt nicht detektierbar sind und ein etwa durch einen Kerzenausfall hervorgerufener Dauerausssetzer erst zu spät erkannt wird. Außerdem sind derartige Temperaturüberwachungseinrichtungen aufwendig, teuer und störanfällig.

Aufgabe der Erfindung ist es daher, eine zuverlässige Einrichtung zur raschen Erkennung von Zünd- und Entflammaussetzern zu schaffen.

Dies wird gemäß der Erfindung dadurch erreicht, daß eine Drehzahl- oder Leistungsanalyseschaltung zur Analyse eines von einer Drehzahl- oder Leistungserfassungseinrichtung gelieferten elektrischen Drehzahl- oder Leistungssignales vorgesehen ist, wobei die Drehzahl- oder Leistungsanalyseschaltung ein Differenzierglied und zumindest einen nachgeschalteten Komparator enthält, daß der Komparator bei über- bzw. Unterschreiten eines vorbestimmten Schwellwertes für die Ableitung des Drehzahl- oder Leistungssignales einen einen Zünd- oder Entflammaussetzer eines Zylinders anzeigenden Ausgangsimpuls liefert, daß dem Komparator eine Zähleinrichtung nachgeschaltet ist, wobei jeder Ausgangsimpuls des Komparators den Zählerstand der Zähleinrichtung erhöht bzw. erniedrigt und daß die Zähleinrichtung bei Erreichen eines vorbestimmten Zählerstandes innerhalb einer von einem Zeitgeber festgelegten, vorzugsweise einstellbaren Meßperiodendauer ein Ausgangssignal liefert.

Ein Differenzierglied und ein nachgeschalteter Komparator zur Auswertung eines Drehzahlsignales ist bei einer Einrichtung zur Regelung der Laufunruhe durch eine Regelung der Abgasrückführung bereits an sich bekannt (US-PS 3 872 846). Dabei wird ein gefiltertes, differenziertes und anschließend gleichgerichtetes Signal als Eingangssignal einem Komparator zugeführt. Liegt dieses "Laufunruhe"-Eingangssignal über einem einstellbaren Schwellwert, der der gerade vom Fahrer noch tolerierbaren Laufunruhe des Motors entspricht, so steht am Ausgang des Komparators beispielsweise ein positives Ausgangssignal an. Liegt hingegen das "Laufunruhe"-Eingangssignal unter dem genannten Schwellwert, so produziert der Komparator ein negatives Ausgangssignal. In einem auf den Komparator folgenden Integrator wird aus dem Ausgangssignal schließlich das analoge Regelsignal für die zurückgeführte Menge an Abgasen gebildet. Bei dieser Art der Regelung geht es darum, eine für den Fahrer feststellbare "Gesamtlaufunruhe" als Laufunruhemaß heranzuziehen (beispielsweise sind Drehzahlschwankungen von 12 U/min als Grenze der tolerierbaren Laufunruhe festgelegt). Kurze und spitze Drehzahlschwankungen gehen bei einer solchen Regelung jedoch kaum ein. Es sind aber gerade diese Drehzahlspitzen, die für einen Zünd- oder Entflammaussetzer typisch sind.

Bei der erfindungsgemäßen Einrichtung zur Erkennung von Zünd- und Entflammaussetzern werden deshalb gerade solche spitzen Drehzahlschwankungen, deren Ableitung einen bestimmten Schwellwert überschreitet (und nur solche Drehzahlschwankungen), erfaßt und über eine vorbestimmte Zeitdauer gezählt. Erst ab einer bestimmten Häufigkeit (Erreichen eines bestimmten, einstellbaren Zählerstandes innerhalb einer vorbestimmten, ebenfalls einstellbaren Zeitdauer) erfolgt dann ein Ausgangssignal, das beispielsweise zur Abschaltung des Motors, zu einer Warnung oder zur Vorbeileitung der Abgase am Katalysator führen kann. Eine solche Ermittlung der Häufigkeit ist wünschenswert, weil sporadische Einzelaussetzer kaum Nachteile mit sich bringen. Die genannte Häufigkeit läßt sich über die Meßperiodendauer und/oder über den Zählerstand einstellen, ab dem die Zähleinrichtung ein Ausgangssignal liefert, und hängt beispielsweise vom Motortyp ab. Dauerausssetzer (z.B. bei Kerzenausfall) bewirken bei einer derartigen Ausführungsform ein rasches Hochzählen (Hinabzählen) des Zählers, sodaß schon lange vor Erreichen der Meßperiodendauer der vorbestimmte Zählerstand erreicht ist, bei dem ein Ausgangssignal erfolgt. Dauerausssetzer führen also praktisch zu einem Ausgangssignal. Drehzahlschwankungen, die mit einer von außen herbeigeführten Drehzahländerung zusammenhängen, gehen dabei genausowenig ein wie Drehzahlschwankungen, die mit dem Ablauf der Arbeitstakte oder etwas ungleichen Füllungen korreliert sind.

Die erfindungsgemäße Drehzahl- bzw. Leistungsanalyse, die die Steigung der Drehzahl- bzw. Leistungsschwankungen bewertet, erkennt somit sowohl Einzelaussetzer, welche erst ab einer bestimmten Häufigkeit zu einem Ausgangssignal führen, wie auch Daueraussetzer ohne großen technischen Aufwand rasch und zuverlässig. Die erfindungsgemäße Einrichtung eignet sich insbesondere für sogenannte λ = 1-Motoren, die im Bereich des stöchiometrischen Verbrennungs-Luftverhältnisses betrieben werden. Derartige Motoren weisen nämlich im Normalfall eine hohe Laufruhe auf, sodaß Drehzahlschwankungen ab einer bestimmten Steilheit (Ableitung) als sicheres Indiz für einen Zünd- oder Entflammaussetzer anzusehen sind. Prinzipiell ist die erfindungsgemäße Einrichtung auch für Magermotoren verwendbar.

Im allgemeinen wird eine Drehzahlanalyse leichter durchzuführen sein, als eine Leistungsanalyse, weil man sich ein genaues Drehzahlsignal relativ leicht verschaffen kann. Steht ein genaues Leistungssignal ohnehin zur Verfügung (z.B. bei Motoren, die Generatoren antreiben), so kann natürlich auch eine Leistungsanalyse vorgenommen werden.

Die Erfindung wird im folgenden anhand eines Ausführungsbeispieles durch die Figuren näher erläutert.

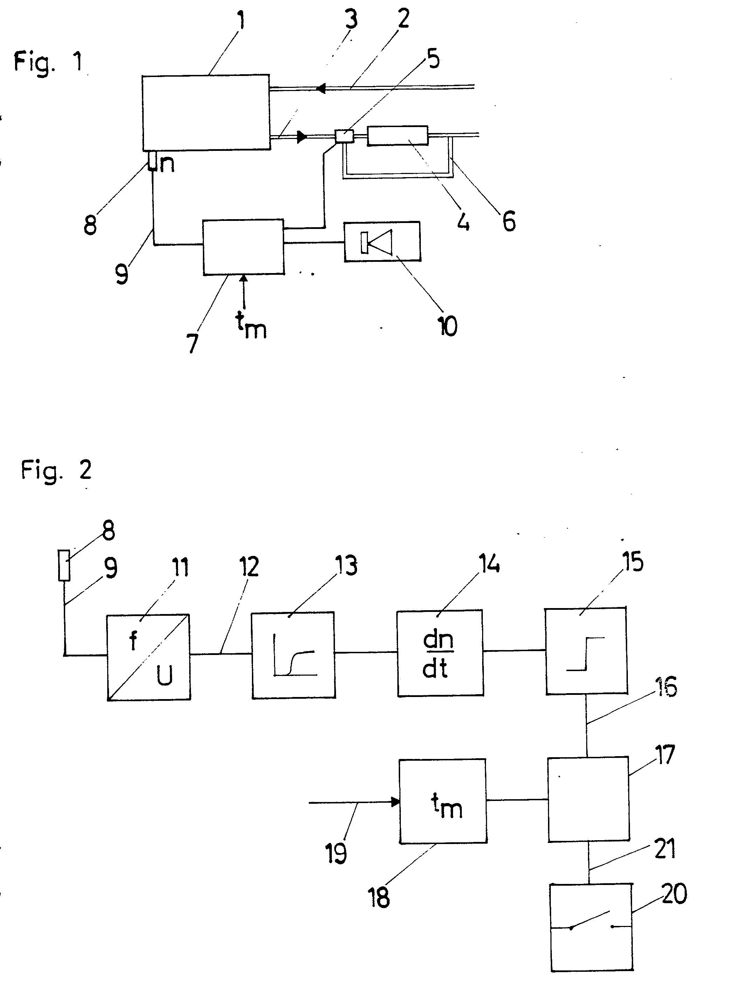

Es zeigen die Fig. 1 schematisch die Verwendung eines Ausführungsbeispieles der erfindungsgemäßen Einrichtung bei einem stationären Gasmotor und die Fig. 2 ein Blockschaltbild der wesentlichen Bestandteile dieses Ausführungsbeispieles der erfindungsgemäßen Einrichtung.

In Fig. 1 ist ein mehrzylindriger stationärer Gasmotor 1 dargestellt, der von einer nicht gezeigten Gemischaufbereitungseinrichtung über die schematisch dargestellte Einlaßleitung 2 mit einem Gas-Luft-Gemisch versorgt wird, dessen Verbrennungs-Luftverhältnis in etwa bei λ = 1 liegt. In der Abgasleitung 3 ist ein Katalysator 4 angeordnet, um den eine über die elektrisch ansteuerbare Ventileinrichtung 5 aktivierbare Bypassleitung 6 führt. Ein im folgenden noch näher beschriebenes Ausführungsbeispiel der erfindungsgemäßen Einrichtung 7 zur Erkennung von Zünd- und Entflammaussetzern des Gasmotors 1 empfängt vom Drehzahlaufnehmer 8 über die Leitung 9 ein Drehzahlsignal, welches in der Einrichtung 7 analysiert wird. Bei einem Daueraussetzer (z.B. Kersenausfall) oder zu häufigen Einzelaussetzern aktiviert die Einrichtung 7 über die elektrisch ansteuerbare Ventileinrichtung die Bypassleitung 6 und schützt damit den Katalysator 4. Gleichzeitig kommt es zum Auslösen einer Signal- Alarmvorrichtung 10.

In Fig. 2 ist der Aufbau der Einrichtung 7 näher dargestellt. Eingangsseitig ist eine Drehzahlerfassungseinrichtung vorgesehen, die im wesentlichen aus dem bereits in Fig. 1 gezeigten Drehzahlaufnehmer 8 und dem Frequenz-Spannungs-Wandler 11 besteht. Am Ausgang dieser Drehzahlerfassungseinrichtung steht auf Leitung 12 ein analoges, der Drehzahl des Gasmotors 1 entsprechendes Spannungssignal bereit.

Die eigentliche erfindungsgemäße Drehzahlanalyseschaltung beginnt beim aktiv aufgebauten Hochpaßfilter 13. Dieser ist gemäß einem bevorzugten Merkmal der Erfindung vorgesehen und sorgt mit einer Grenzfrequenz von größenordnungsmäßig 10 Hz dafür, daß der Gleichspannungsanteil des auf Leitung 12 anstehenden Signals eliminiert wird, und dafür, daß ein von außen herbeigeführtes, relativ langsames Auf- und Abfahren der Drehzahl keinen Aussetzer vortäuscht.

Um die Steilheit (Ableitung) von Drehzahlschwankungen zu bewerten und als Aussetzer zu identifizieren, ist ein Differenzierglied 14 und ein nachgeschalteter Komparator 15 vorgesehen, der bei Überschreiten eines vorbestimmten Schwellwertes für die Ableitung des Drehzahlsignales auf Leitung 16 einen einen Aussetzer eines Zylinders des Gasmotors 1 anzeigenden Ausgangsimpuls liefert.

Beim vorliegenden Ausführungsbeispiel gelangen die Ausgangsimpulse des Komparators 15 zunächst auf eine Zähleinrichtung 17. Jeder Aussetzer bzw. jeder Ausgangsimpuls zählt den Zählerstand von einem Startwert aus hoch. Wird innerhalb einer über den Eingang 19 einstellbaren, vom Zeitgeber 18 vorgegebenen Meßperiodendauer (typischerweise einige Sekunden) ein vorbestimmter Zählerstand erreicht, so wird der symbolisch dargestellte Ausgangsschalter 20 über ein Ausgangssignal auf Leitung 21 geschlossen, was beim vorliegenden Ausführungsbeispiel den Bypass 6 um den Katalysator 4 aktiviert und gleichzeitig die Signal- und/order Alarmvorrichtung (z.B. Leuchte, Hupe etc.) anschaltet.

Am Ende jeder der aufeinanderfolgenden Meßperioden setzt der Zeitgeber 18 den Zählerstand immer weiter auf Null. Zur Erreichung des vorbestimmten Zählerstandes, der beispielsweise von einem digitalen Komparator in der Zähleinrichtung 17 erfaßt wird, kommt es daher entweder bei Daueraussetzern oder bei Einzelaussetzern, die eine bestimmte Häufigkeit überschreiten. Einzelaussetzer, die unter dieser unter anderem auch über die Meßperiodendauer $t_m$ einstellbaren Häufigkeit liegen, bleiben unberücksichtigt, womit zu häufige Motorabschaltungen oder sonstige Überreaktionen auf Aussetzer vermeidbar sind. Mit der erfindungsgemäßen Einrichtung ist über den gesamten Drehzahl- und Lastbereich ein sicheres Erkennen von Dauer- und Einzelaussetzern möglich.

## Ansprüche

1. Einrichtung zur Erkennung von Zünd- und Entflammaussetzern bei einer insbesondere im Bereich des stöchiometrischen Verbrennungs-Luftverhältnisses ($\lambda = 1$) betriebenen mehrzylindrigen Verbrennungskraftmaschine, dadurch gekennzeichnet, daß eine Drehzahl- oder Leistungsanalyseschaltung zur Analyse eines von einer Drehzahl- oder Leistungserfassungseinrichtung (8,11) gelieferten elektrischen Drehzahl- oder Leistungssignales vorgesehen ist, wobei die Drehzahl- oder Leistungsanalyseschaltung ein Differenzierglied (14) und zumindest einen nachgeschalteten Komparator (15) enthält, daß der Komparator (15) bei Über- bzw. Unterschreiten eines vorbestimmten Schwellwertes für die Ableitung des Drehzahl-oder Leistungssignales einen einen Zünd- oder Entflammaussetzer eines Zylinders anzeigenden Ausgangsimpuls liefert, daß dem Komparator (15) eine Zähleinrichtung (17) nachgeschaltet ist, wobei jeder Ausgangsimpuls des Komparators (15) den Zählerstand der Zähleinrichtung (17) erhöht bzw. erniedrigt und daß die Zähleinrichtung (17) bei Erreichen eines vorbestimmten Zählerstandes innerhalb einer von einem Zeitgeber (18) festgelegten, vorzugsweise einstellbaren Meßperiodendauer ($t_m$) ein Ausgangssignal liefert.

2. Einrichtung nach Anspruch 1, dadurch gekennzeichnet, daß die Drehzahl- oder Leistungsanalyseschaltung eingangsseitig ein vorzugsweise aktives Hochpaßfilter (13) aufweist.

3. Einrichtung nach Anspruch 1 oder 2, dadurch gekennzeichnet, daß der Zeitgeber (18) am Ende jeder der aufeinanderfolgenden Meßperioden den Zählerstand auf einen Startwert, vorzugsweise auf Null, setzt.

4. Einrichtung nach einem der Ansprüche 1 bis 3, dadurch gekennzeichnet, daß das Ausgangssignal der Zähleinrichtung (17) eine Signal- und/oder Alarmvorrichtung (10) aktiviert.

5. Einrichtung nach einem der Ansprüche 1 bis 4, dadurch gekennzeichnet, daß die Verbrennungskraftmaschine (1) bei einem Ausgangssignal der Zähleinrichtung (17) abgestellt wird.

6. Einrichtung nach einem der Ansprüche 1 bis 4, für eine Verbrennungskraftmaschine, in deren Abgasleitung ein Katalysator angeordnet ist, dadurch gekennzeichnet, daß die Abgase über einen Bypass (6) am Katalysator (4) vorbeigeleitet werden, falls ein Ausgangssignal der Zähleinrichtung (17) auftritt.

Fig. 1

Fig. 2